Europäisches Patentamt

European Patent Office

Office européen des brevets

(11) Publication number: **0 238 120**
**A2**

(12) # EUROPEAN PATENT APPLICATION

(21) Application number: **87200304.1**

(22) Date of filing: **24.02.87**

(51) Int. Cl.⁴: **B21D 43/28**

(30) Priority: **06.03.86 NL 8600578**

(43) Date of publication of application:
**23.09.87 Bulletin 87/39**

(84) Designated Contracting States:
**AT BE CH DE ES FR GB GR IT LI LU NL SE**

(71) Applicant: **Safan B.V.**
**Kwinkweerd 11**
**NL-7241 CW Lochem(NL)**

(72) Inventor: **Slot, Teunis**
**Kwinkweerd 11**
**NL-7241 CW Lochem(NL)**

(74) Representative: **Noz, Franciscus Xaverius, lr.**
**et al**
**Algemeen Octrooibureau P.O. Box 645**
**NL-5600 AP Eindhoven(NL)**

(54) **Guillotine shearing machine.**

(57) Guillotine shearing machine provided with a pair of knives movable relative to each other for cutting through plate-shaped material and also with supporting means for supporting plate-shaped material, whereby at least one electric linear motor is arranged near the supporting means.

FIG.1

EP 0 238 120 A2

## Guillotine shearing machine.

The invention relates to a guillotine shearing machine provided with a pair of knives movable relative to each other for cutting through plate-shaped material and also with supporting means for supporting plate-shaped material.

Such guillotine shearing machines are generally known and have been widely used for many decades.

With such shearing machines the plate-shaped material to be processed is usually moved by hand over the supporting means relative to the knives by the operator of the shearing machine, which is a tiring activity and consequently may have an adverse effect on the execution of the required operations.

Use is also made of mechanical devices for said moving, but mostly they form impeding projections, whilst they also increase the wear of the machine and thus the required maintenance.

The purpose of the invention is to obtain a guillotine shearing machine of the above-mentioned kind whereby the disadvantages described above can be avoided or at least decreased to a considerable degree.

According to the invention this can be achieved because at least one electric linear motor is arranged near the supporting means.

Such a linear motor is a simple element, compactly constructed and thus easily accommodable within the construction of the guillotine shearing machine by means of which a continuous or intermittent force can be simply exerted on the plate-shaped material with a view to moving said plate-shaped material.

The invention will be more fully explained hereinafter with reference to a few possible embodiments of the construction according to the invention illustrated in the accompanying figures.

Fig 1 is a diagrammatic perspective view of a guillotine shearing machine according to the invention.

Fig 2 is a diagrammatic top view of a guillotine shearing machine according to the invention.

Fig 3 is a top view substantially corresponding with fig 2, whereby i.a. the linear motor is illustrated in a different position.

Fig 4 illustrates a second possible arrangement of linear motors with a guillotine shearing machine in accordance with the invention.

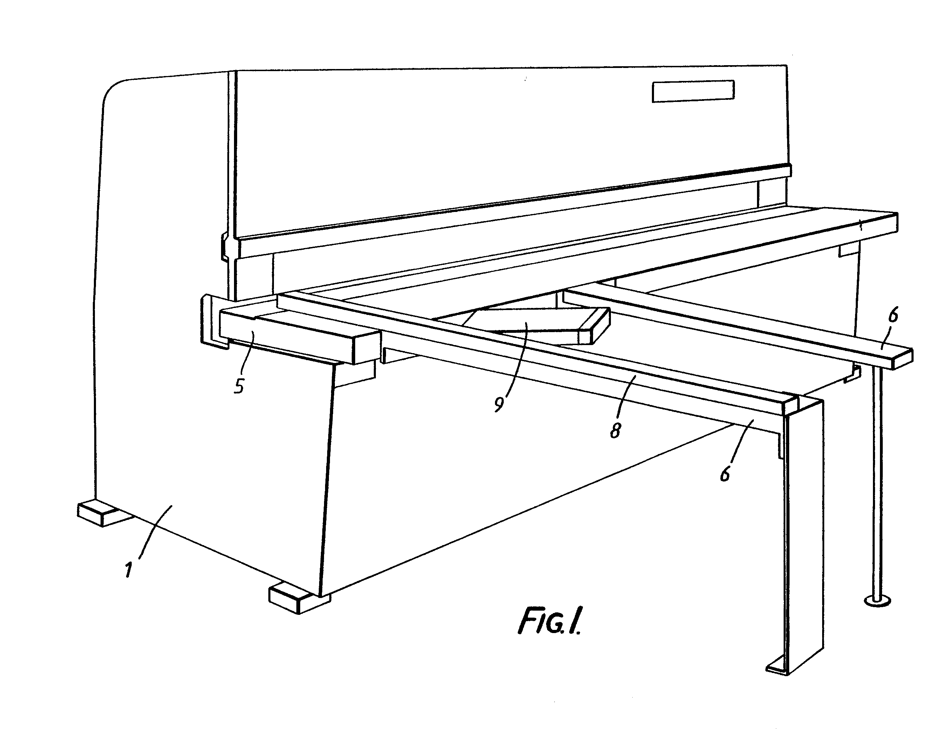

The guillotine shearing machine illustrated in fig 1 comprises a frame 1 of a usual construction. The guillotine shearing machine thereby comprises a lower knife 2 fixed to the frame and an upper knife 3, which is fixed to a frame part 4 which is movable up-and-down in the usual manner. The lower knife 2 extends along a boundary edge of a shearing table 5. Joining the boundary edge of the shearing table 5 facing away from the lower knife are supporting beams 6 extending transverse thereto.

At the side of the lower knife facing away from the shearing table there is arranged an adjustable rear stop 7 for limiting the movement of plate-shaped material moved over the shearing table in the direction of the rear stop 7 and under the upper knife 4.

To the supporting beam 6 arranged near the side of the shear there is fixed a stop beam 8 extending perpendicularly to the longitudinal direction of the knives 2 and 3.

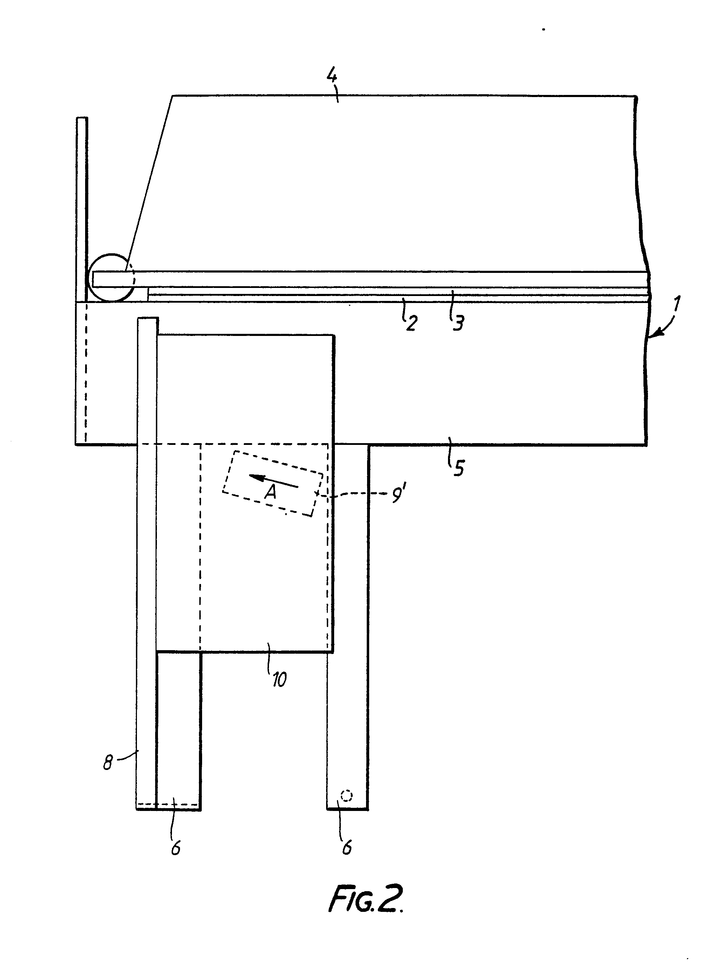

Between the supporting beams 6 there is furthermore provided an electric linear motor 9, whose longitudinal axis encloses an angle with a line extending parallel to the knives with the arrangement illustrated in fig 2.

Thus, by means of a linear motor being in operation, a force can be exerted, in the direction according to arrow A, on a plate 10 which lies on the supporting beams 6 and is to be cut by means of the guillotine shearing machine, so that on plate 10 a force which presses the plate 10 against the stop 8 is exerted, as well as a force which attempts to move the plate 10 in a direction parallel to said stop 8.

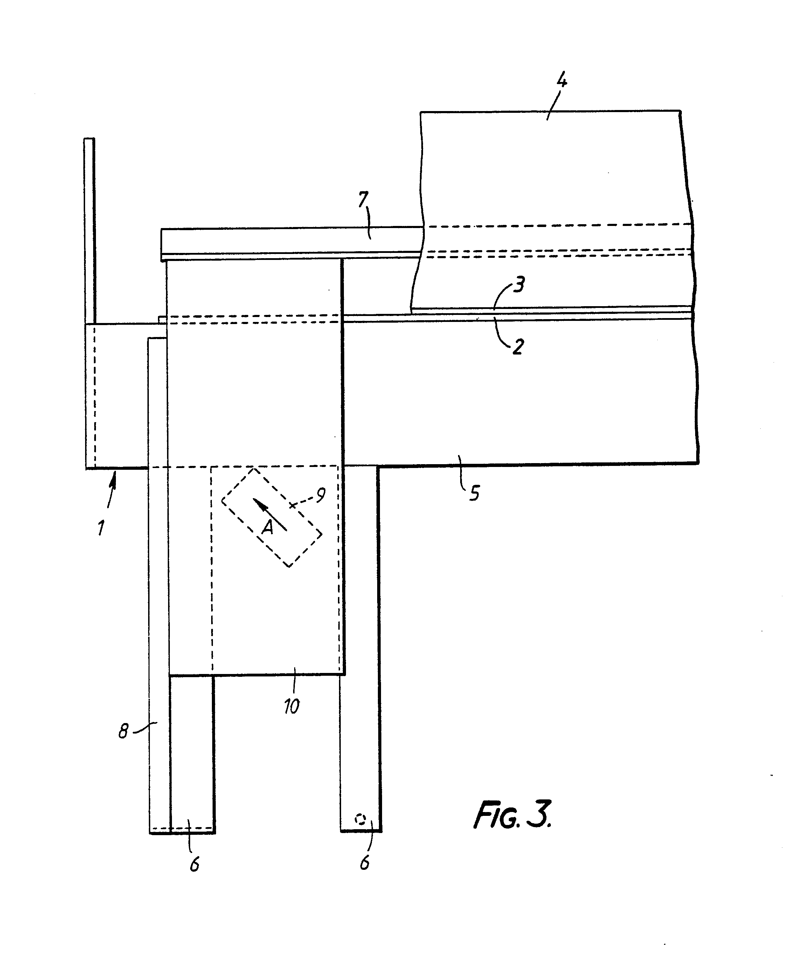

Preferably the linear motor is adjustable relative to the frame of the guillotine shear about a pivot axis extending perpendicularly to the plane of the drawing, i.e. generally vertically, seen if fig 2, e.g. from the position illustrated in fig 2 to the position 9' illustrated in fig 3, as a result of which the direction of the force exerted on the plate 10 by means of the linear motor can be changed.

It will be apparent that with a raised upper knife it will be possible to move the plate pressed against the stop beam 8 also in the direction of the rear stop 7 by means of the linear motor until the plate bears against the stop 7. Then the clamping bar clamping the plate against the table and next the upper knife will be moved downward in the usual manner to cut through the plate. The linear motor can remain switched on thereby without this leading to undesired consequences. As soon as the upper knife and then the clamping bar have been moved upward after the plate has been cut through the linear motor will immediately effect a displacement of the plate again until it bears against the rear stop 7, so that a quick movement of the plate into the desired position is ensured without the operator of the shear having a exert any force on the plate.

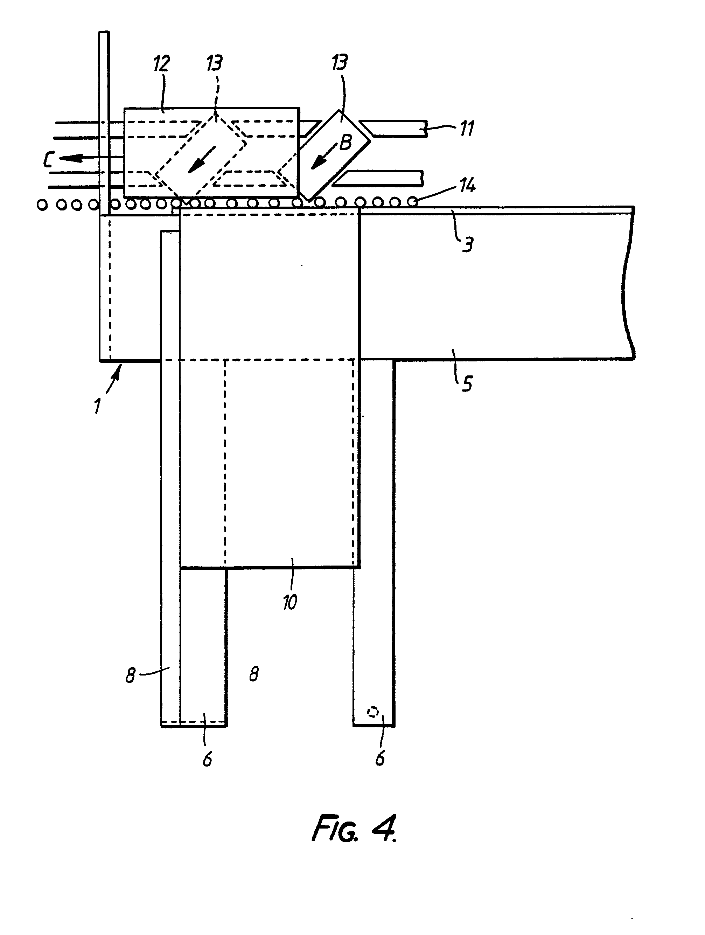

With the embodiment illustrated in fig 4 those parts which correspond with the parts of the guillotine shearing machine discussed hereinabove with reference to figs 1-3 are provided with the same reference numbers as those used in figs 1-3.

In the embodiment illustrated here supporting beams 11 are provided behind the shearing table for receiving cut-off plate parts 12 on a lower level than the upper side of the shearing table.

Between the supporting beams 11 there are preferably provided linear motors 13 also adjustable in position, which during operation exert a force on the plate part 12 in the direction according to arrow B and thereby press said plate part against guiding rolls 14 freely rotatable about vertical axes of rotation. The result of all this will be that the plate part 12 is discharged in the direction according to arrow C.

From the above it will be apparent that it is possible to move the plates to be cut and/or the cut-off plate parts in the desired direction in a simple manner by using one or more linear motors.

Preferably the linear motors are reversible, in order to increase thus the possibilities for moving the plate-shaped material.

## Claims

1. Guillotine shearing machine provided with a pair of knives movable relative to each other for cutting through plate-shaped material and also with supporting means for supporting plate-shaped material, characterised in that at least one electric linear motor is arranged near the supporting means.

2. Guillotine shearing machine according to claim 1, characterised in that the linear motor is adjustable about a pivot axis extending perpendicularly to the supporting plane defined by the supporting means.

3. Guillotine shearing machine according to claim 1 or 2, characterised in that the direction of the drive of the linear motor is reversible.

4. Guillotine shearing machine according to any of the preceding claims, characterised in that a linear motor is arranged at the supply side of the plate-shaped material, such that its longitudinal axis encloses an acute angle with a guide for the plate-shaped material extending transverse to the knives.

5. Guillotine shearing machine according to any of the preceding claims, characterised in that at the discharge side for the cut-off material there is arranged a linear motor whose longitudinal axis encloses an acute angle with guiding means provided for the cut-off material.

Fig. I.

FIG.2.

Fig. 3.

FIG. 4.